# EUROPÄISCHE PATENTSCHRIFT

(11) **EP 2 900 448 B1**
(45) Veröffentlichungstag und Bekanntmachung des Hinweises auf die Patenterteilung: **11.04.2018**
(21) Anmeldenummer: 13753321.2
(22) Anmeldetag: 28.08.2013
(51) Int. Cl.: B29C 45/18, B29K 105/12, B29K 105/06, B29C 45/00

(54) **SPRITZGIESSANLAGE UND SPRITZGIESSVERFAHREN ZUR HERSTELLUNG VON FASERVERSTÄRKTEN KUNSTSTOFFTEILEN**
INJECTION MOLDING SYSTEM AND INJECTION MOLDING METHOD FOR PRODUCING FIBER-REINFORCED PLASTIC PARTS
INSTALLATION DE MOULAGE PAR INJECTION ET PROCEDE DE MOULAGE PAR INJECTION POUR FABRIQUER DES ÉLÉMENTS EN PLASTIQUE RENFORCES DE FIBRES

(30) Priorität: 27.09.2012 DE 102012217586
(43) Veröffentlichungstag der Anmeldung: 05.08.2015
(73) Patentinhaber: SKZ-KFE gGmbH Kunststoff-Forschung und - Entwicklung, 97076 Würzburg (DE)
(72) Erfinder: HEIDEMEYER, Peter, 97318 Kitzingen (DE); DEUBEL, Christian, 97273 Kürnach (DE); KRETSCHMER, Karsten, 97295 Waldbrunn (DE); SCHINK, Klaus, 97265 Hettstadt (DE)
(74) Vertreter: Rau, Schneck & Hübner Patentanwälte Rechtsanwälte PartGmbB
(86) Internationale Anmeldenummer: PCT/EP2013/067819
(87) Internationale Veröffentlichungsnummer: WO 2014/048666

(56) Entgegenhaltungen:
- EP-A1- 2 072 217
- DE-A1- 2 420 686
- DE-A1- 19 754 409
- JP-A- H08 103 921

## Beschreibung

Die Erfindung betrifft eine Spritzgießanlage zur Herstellung von faserverstärkten Kunststoffteilen gemäß dem Oberbegriff des Anspruchs 1. Ferner betrifft die Erfindung ein Spritzgießverfahren zur Herstellung von faserverstärkten Kunststoffteilen.

Aus der DE 42 36 662 A1 ist eine Spritzgießanlage bekannt, die zur Herstellung von faserverstärkten Kunststoffteilen eine Spritzgießvorrichtung bzw. Spritzgießmaschine und eine Zuführvorrichtung zur Zuführung von Fasern in die Spritzgießmaschine aufweist. Die Fasern werden von Roving-Spulen abgewickelt und als Endlosfasern durch Einzugsstutzen in eine Dekompressionszone der Schneckenwelle der Spritzgießmaschine zugeführt. Die Endlosfasern werden anschließend in der Spritzgießmaschine gebrochen und in einer Mischzone in das aufgeschmolzene Kunststoffmaterial eingemischt. Nachteilig ist, dass der Fasergehalt und die Faserlänge bei dieser Spritzgießanlage schwierig einstellbar sind.

Aus der JP 8 103921 A ist eine Spritzgießanlage mit einer Spritzgießmaschine und einer Zuführung für Glasfasern bekannt.

Aus der DE 2 420 686 A ist eine Spritzgießanlage mit einer Spritzgießvorrichtung bekannt, die endseitig der Schnecke einen Fülltrichter zur Zuführung von zerhackten Glasfasern aufweist.

Aus der EP 2 072 217 A1 ist eine Vorrichtung zur Herstellung von thermoplastischen Halbzeugen über die Direktverarbeitung von Endlosfasern bekannt. Endloses Fasermaterial wird durch eine Schneideinrichtung in Fasern bestimmter Länge geschnitten und anschließend über eine Schneckenmaschine einem Extruder zugeführt.

Aus der DE 197 54 409 A1 ist eine Vorrichtung zum kontinuierlichen Zuführen von Schnittfasern in einen Extruder bekannt, wobei die Schnittfasern mittels eines Luftstromes in ein Schneckengehäuse gesaugt werden.

Der Erfindung liegt die Aufgabe zugrunde, eine Spritzgießanlage zu schaf fen, die in einfacher, zuverlässiger und flexibler Weise die Herstellung von faserverstärkten Kunststoffteilen ermöglicht.

Diese Aufgabe wird durch eine Spritzgießanlage mit den Merkmalen des Anspruchs 1 gelöst. Dadurch, dass die Zuführvorrichtung das Zuführen von geschnittenen Fasern in die Spritzgießvorrichtung bzw. Spritzgießmaschine ermöglicht, ist der Fasergehalt und/oder die Faserlänge bei der Herstellung von faserverstärkten Kunststoffteilen einfach und flexibel einstellbar. Dies kann beispielsweise derart erfolgen, dass eine bestimmte Menge an Fasern mit einer bestimmten Faserlänge in die Zuführvorrichtung gegeben wird, die dann die Fasern in die Spritzgießvorrichtung dosiert. Alternativ kann die Zuführvorrichtung eine Schneideinrichtung aufweisen, sodass Fasern einer bestimmten Faserlänge aus Endlosfasern geschnitten und in einer bestimmten Menge der Zuführvorrichtung zugeführt werden, die dann die geschnittenen Fasern in die Spritzgießvorrichtung dosiert. Dadurch, dass die Fasermenge und/oder die Faserlänge einfach und flexibel einstellbar sind, wird in einfacher Weise eine hohe Flexibilität bei der Herstellung von faserverstärkten Kunststoffteilen erzielt. Insbesondere können faserverstärkte Kunststoffteile hergestellt werden, die Fasern mit einer definierten Faserlänge aufweisen, wobei die Faserlänge in einem weiten Bereich variierbar ist. Die Fasern weisen vorzugsweise eine Länge von 2 mm bis 100 mm, und insbesondere von 15 mm bis 50 mm auf. Vorzugsweise sind die Fasern als Langschnittfasern ausgebildet. Dadurch, dass die Fasern mittels der Zuführvorrichtung direkt in die Spritzgießvorrichtung dosiert werden, also ohne ein vorheriges Einmischen in Kunststoffmaterial, ist das Zuführen der Fasern und der Aufbau der Spritzgießanlage vergleichsweise einfach. Das Zuführen der Fasern mittels der Zuführvorrichtung sowie die Herstellung von Kunststoffteilen mittels der Spritzgießvorrichtung sind mittels einer Steuereinrichtung aufeinander abgestimmt. Vorzugsweise wird die Zuführvorrichtung diskontinuierlich und entsprechend der Spritzgießvorrichtung betrieben. Die Schneckenwelle bzw. Spritzgieß-Schneckenwelle ist vorzugsweise konzentrisch in der ersten Gehäusebohrung angeordnet und entlang der ersten Drehachse verlagerbar, um das Kunststoffmaterial und die Fasern aus der ersten Gehäusebohrung auszutragen und in das Formwerkzeug einzubringen. Alternativ kann die Schneckenwelle bzw. Spritzgieß-Schneckenwelle konzentrisch in der ersten Gehäusebohrung angeordnet, jedoch nicht entlang der ersten Drehachse verlagerbar sein, sodass das Kunststoffmaterial und die Fasern aus der ersten Gehäusebohrung ausgetragen und mittels einer Kolben-Zylinder-Einheit in das Formwerkzeug eingebracht werden. Eine derartige Kolben-Zylinder-Einheit wird auch als Shooting Pot bezeichnet.

Die Zuführvorrichtung gewährleistet in einfacher Weise ein dosiertes Zuführen von Fasern in die Spritzgießvorrichtung. Vorzugsweise ist die Mehrwellen-Schneckenmaschine als gleichsinnig drehantreibbare Zweiwellen- bzw. Doppelwellen-Schneckenmaschine ausgebildet. Die Mehrwellen-Schneckenmaschine ist vorzugsweise seitlich an der Spritzgießvorrichtung angeordnet. Es ist zudem in einfacher und zuverlässiger Weise ein Einbringen der Fasern in die Zuführvorrichtung gewährleistet, sodass diese die Fasern in zuverlässiger Weise in die Spritzgießvorrichtung dosieren kann. Durch die Saugeinrichtung werden die Fasern durch die Faser-Zuführöffnung in die Mehrwellen-Schneckenmaschine eingesaugt. Durch die Filtereinrichtung werden die eingesaugten Fasern aus dem Luftstrom ausgefiltert, sodass die Zuführ-Schneckenwellen die ausgefilterten Fasern von der Filtereinrichtung abstreifen und mitnehmen können.

Dadurch, dass die Strömungskanäle der Filtereinrichtung in der Strömungsrichtung einen sich erweiternden Strömungsquerschnitt aufweisen, wird ein Zusetzen der Filtereinrichtung wirkungsvoll verhindert. Fasern, die in einen der Strömungskanäle gesaugt werden, finden dort aufgrund des sich erweiternden Strömungsquerschnitts einen vergleichsweise geringen Halt, sodass diese aufgrund des Luftstroms durch den Strömungskanal gesaugt und über eine Saugleitung abgeführt werden. Diejenigen Fasern, die also in einen der Strömungskanäle gelangen, werden im Wesentlichen ungehindert durch die Filtereinrichtung abgesaugt. Hierdurch wird auf einfache und zuverlässige Weise ein Zusetzen der Filtereinrichtung verhindert. Die Abmessungen der Strömungskanäle sind auf die zu fördernden Fasern abgestimmt, sodass einerseits ein ausreichend hoher Luftstrom vorhanden ist und feine Staubpartikel durch die Filtereinrichtung abgesaugt werden, jedoch andererseits die zu fördernden Fasern im Normalfall nicht durch Filtereinrichtung gelangen. Hierdurch kann eine vergleichsweise lange Standzeit und eine hohe Zuverlässigkeit der Filtereinrichtung erzielt werden.

Eine Spritzgießanlage nach Anspruch 2 gewährleistet ein zuverlässiges Zuführen und Dosieren der Fasern in die Spritzgießvorrichtung. Die Zuführ-Schneckenwellen sind vorzugsweise dicht kämmend ausgebildet. Eine Spritzgießanlage nach Anspruch 3 gewährleistet in einfacher Weise das direkte Zuführen der Fasern in die Spritzgießvorrichtung. Dadurch, dass die Zuführvorrichtung mit ihrem Gehäuse direkt an dem Gehäuse der Spritzgießvorrichtung angeordnet ist, münden die Gehäusebohrungen der Zuführvorrichtung direkt in die Gehäusebohrung der Spritzgießvorrichtung, sodass die Fasern in einfacher und direkter Weise in die Spritzgießvorrichtung zugeführt werden können.

Eine Spritzgießanlage nach Anspruch 4 gewährleistet in einfacher und zuverlässiger Weise das direkte Zuführen der Fasern in die Spritzgießvorrichtung. Durch die Ausbildung der zweiten Zuführöffnung können sich die Zuführ-Schneckenwellen bis in diese und bis zu der Gehäusebohrung der Spritzgießvorrichtung erstrecken, sodass die Fasern bis zu dem aufgeschmolzenen Kunststoffmaterial förderbar sind.

Eine Spritzgießanlage nach Anspruch 5 gewährleistet in einfacher Weise das Zuführen der Fasern in die Spritzgießvorrichtung. Durch den Winkel ϕ ist insbesondere der erforderliche Bauraum der Spritzgießanlage veränderbar.

Eine Spritzgießanlage nach Anspruch 6 gewährleistet eine einfache und zuverlässige Herstellung von faserverstärkten Kunststoffteilen. Durch die vergleichsweise längere Schneckenwelle bzw. Spritzgieß-Schneckenwelle werden die zugeführten Fasern in zuverlässiger Weise in das aufgeschmolzene Kunststoffmaterial eingearbeitet, sodass eine homogene Kunststoff-Faser-Mischung erzeugt wird.

Eine Spritzgießanlage nach Anspruch 7 gewährleistet in einfacher und zuverlässiger Weise die Herstellung von faserverstärkten Kunststoffteilen. Durch die Anordnung der zweiten Zuführöffnung wird einerseits gewährleistet, dass das Kunststoffmaterial in Folge des Abstandes A₁ bereits auf geschmolzen ist und dass andererseits aufgrund des Abstandes A₂ ein ausreichendes Einmischen der Fasern in die Kunststoffschmelze erfolgt, sodass eine homogene Kunststoff-Faser-Mischung erzeugt wird.

Eine Spritzgießanlage nach Anspruch 8 gewährleistet in einfacher Weise das Zuführen der Fasern. Dadurch, dass die Schneckenwelle bzw. Spritzgieß-Schneckenwelle in der Zuführzone eine vergleichsweise höhere Gangtiefe aufweist, wird das aufgeschmolzene Kunststoffmaterial an der zweiten Zuführöffnung im wesentlichen drucklos vorbeigefördert, sodass die Fasern durch die zweite Zuführöffnung in einfacher Weise in die Spritzgießvorrichtung zuführbar sind.

Eine Spritzgießanlage nach Anspruch 9 gewährleistet die Erzeugung einer homogenen Kunststoff-Faser-Mischung.

Eine Spritzgießanlage nach Anspruch 10 ermöglicht eine flexible Anpassung der Spritzgieß-Schneckenwelle auf das Kunststoffmaterial und/oder die Fasern, sodass in zuverlässiger Weise faserverstärkte Kunststoffteile mit hoher Qualität herstellbar sind. Vorzugsweise ist die Schneckenspitze der Schneckenwelle bzw. Spritzgieß-Schneckenwelle zum Austausch lösbar befestigt.

Eine Spritzgießanlage nach Anspruch 11 gewährleistet in einfacher Weise die Herstellung von faserverstärkten Kunststoffteilen. Dadurch, dass die Spritzgießvorrichtung zusammen mit der Zuführvorrichtung verfahrbar ist, kann die Spritzgießvorrichtung zum Zwecke der Wartung und/oder Reparatur gegenüber der nicht an der Spritzgießvorrichtung angeordneten Formwerkzeughälfte axial verfahren werden. Hierdurch kann beispielsweise auf einfache Weise die Austragsöffnung bzw. die Maschinendüse gereinigt werden. Darüber hinaus wird hierdurch eine thermische Trennung zu der nicht an der Spritzgießvorrichtung angeordneten, kälteren Formwerkzeughälfte hergestellt.

Eine Spritzgießanlage nach Anspruch 12 gewährleistet in einfacher und zuverlässiger Weise das Zuführen der Fasern.

Eine Spritzgießanlage nach Anspruch 13 gewährleistet eine einfache und zuverlässige Zuführung der Fasern. Die Filtereinrichtung ist aus einer Vielzahl gleichartig ausgebildeter Filterelemente modular aufgebaut, die zu der Filtereinrichtung zugefügt sind. Die Filterelemente bilden somit ein Filterpaket. Durch die Filterelemente kann in einfacher Weise eine Filtereinrichtung bzw. ein Filterpakete mit beliebiger Filterlänge ausgebildet werden. Die paketförmig angeordneten Filterelemente werden in eine Saugöffnung des Gehäuses der Mehrwellen-Schneckenmaschine eingebaut. Die Anzahl der Filterelemente richtet sich nach der benötigten Filterlänge und der Baugröße der Mehrwellen-Schneckenmaschine. Beispielsweise werden mindestens 10, insbesondere mindestens 20 und insbesondere mindestens 30 Filterelemente in der Faser-Zuführrichtung nacheinander angeordnet.

Eine Spritzgießanlage nach Anspruch 14 gewährleistet eine zuverlässige Herstellung von faserverstärkten Kunststoffteilen. Durch den Überwachungssensor wird ein Rückfluss bzw. Rückstau des aufgeschmolzenen Kunststoffmaterials von der Spritzgießvorrichtung in die Zuführvorrichtung überwacht. Die Überwachung erfolgt beispielsweise über einen Sensor zur direkten oder indirekten Messung des Drehmoments der Zuführ-Schneckenwellen und/oder einen Drucksensor und/oder einen Temperatursensor. Wird ein einstellbarer Grenzwert für das Drehmoment und/oder den Druck und/oder der Temperatur überschritten, so wird ein Rückstau des Kunststoffmaterials detektiert. Um ein Zusetzen der Zuführeinrichtung bzw. der Mehrwellen-Schneckenmaschine mit Kunststoffmaterial zu vermeiden, kann eine Gegenmaßnahme bzw. können Gegenmaßnahmen eingeleitet werden.

Eine Spritzgießanlage nach Anspruch 15 gewährleistet in einfacher und flexibler Weise das Zuführen von geschnittenen Fasern. Durch die Schneideinrichtung können Endlosfasern in einer vordefinierten Menge und einer vordefinierten bzw. einstellbaren Faserlänge bereitgestellt werden, die dann mittels der Mehrwellen-Schneckenmaschine der Spritzgießvorrichtung zugeführt werden können.

Der Erfindung liegt ferner die Aufgabe zugrunde ein Spritzgießverfahren zu schaffen, das eine einfache und flexible Herstellung von faserverstärkten Kunststoffteilen ermöglicht.

Diese Aufgabe wird durch ein Verfahren mit den Merkmalen des Anspruchs 16 gelöst. Die Zuführvorrichtung wird vorzugsweise entsprechend der Spritzgießvorrichtung diskontinuierlich betrieben. Die Vorteile des erfindungsgemäßen Spritzgießverfahrens entsprechen den bereits beschriebenen Vorteilen der erfindungsgemäßen Spritzgießanlage. Das erfindungsgemäße Spritzgießverfahren kann zusätzlich mit den Merkmalen der Ansprüche 2 bis 15 weitergebildet werden.

Weitere Merkmale, Vorteile und Einzelheiten der Erfindung ergeben sich aus der nachfolgenden Beschreibung eines Ausführungsbeispiels. Es zeigen:

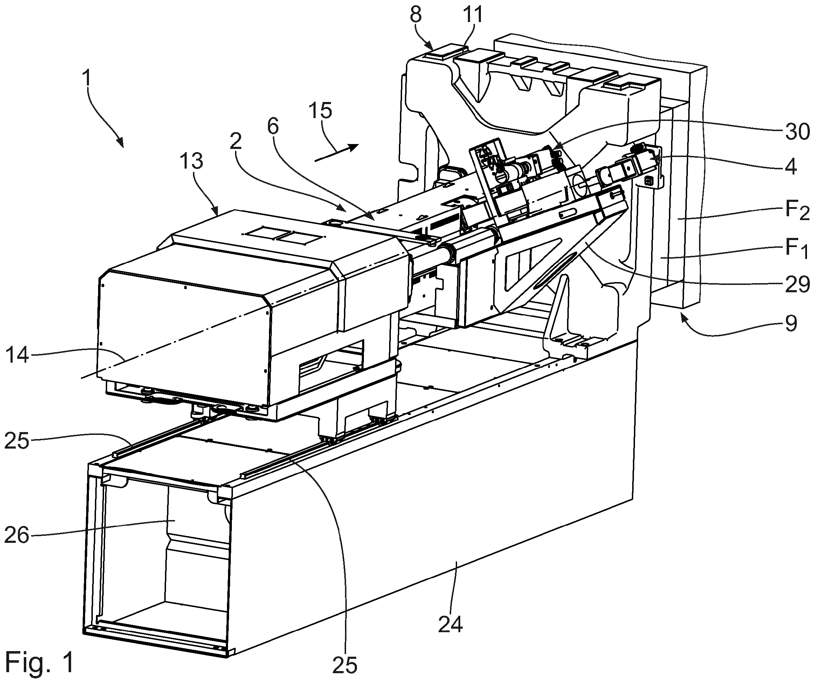

- Fig. 1: eine perspektivische Ansicht einer Spritzgießanlage zur Herstellung von faserverstärkten Kunststoffteilen,

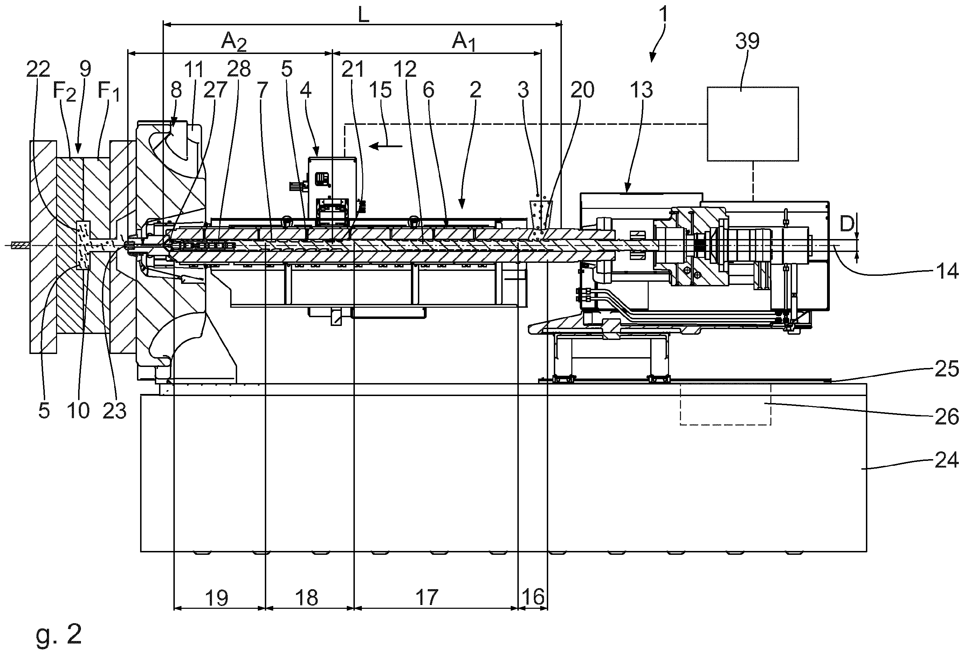

- Fig. 2: einen Längsschnitt durch eine Spritzgießvorrichtung der Spritzgießanlage in Fig. 1,

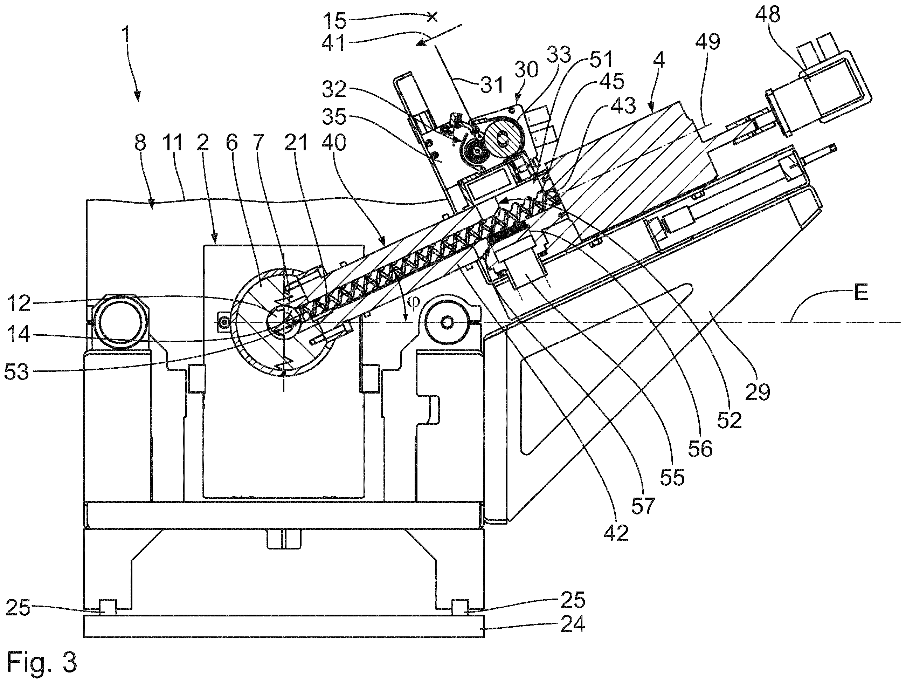

- Fig. 3: einen Querschnitt durch die Spritzgießvorrichtung in Fig. 2 im Bereich einer Zuführvorrichtung,
- Fig. 4: eine schematische Ansicht der Zuführvorrichtung in Fig. 3,

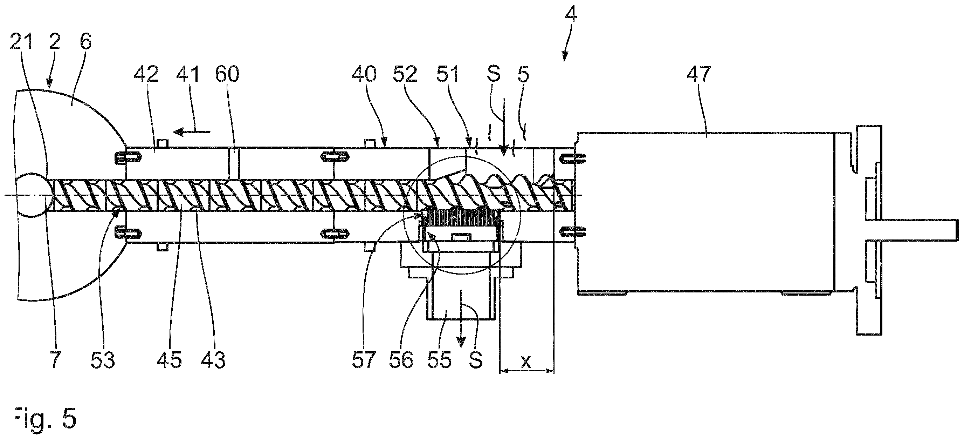

- Fig.5: einen Längsschnitt durch die Zuführvorrichtung,

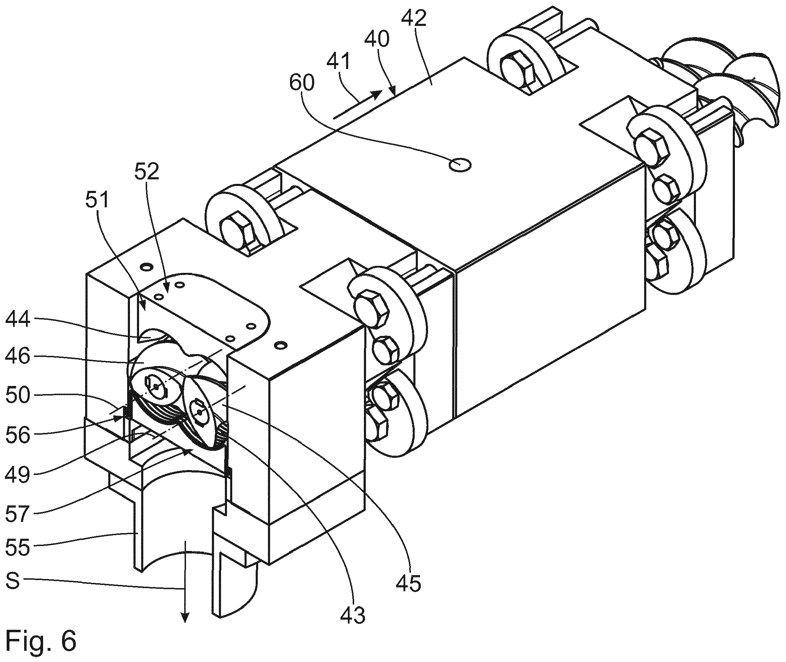

- Fig. 6: einen perspektivischen Querschnitt durch die Zuführvorrichtung im Bereich einer Filtereinrichtung,

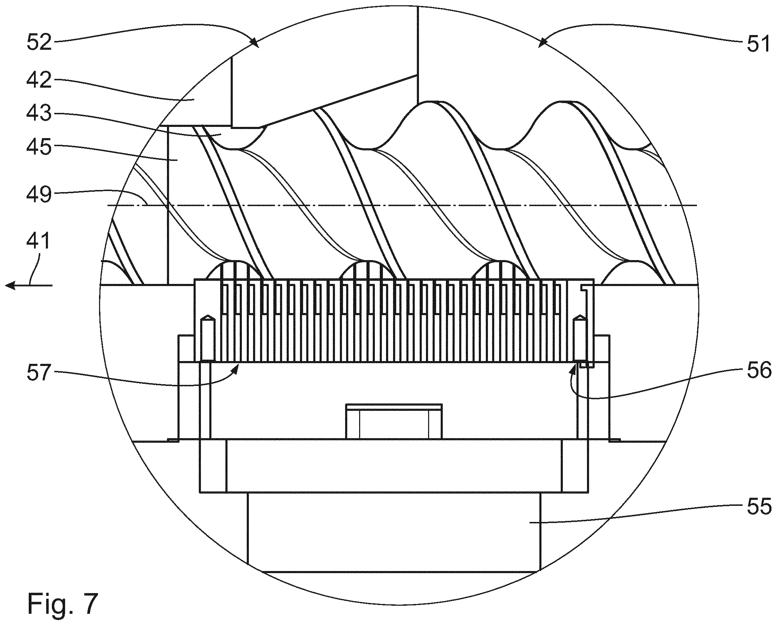

- Fig. 7: einen vergrößerten Längsschnitt durch die Zuführvorrichtung im Bereich der Filtereinrichtung,

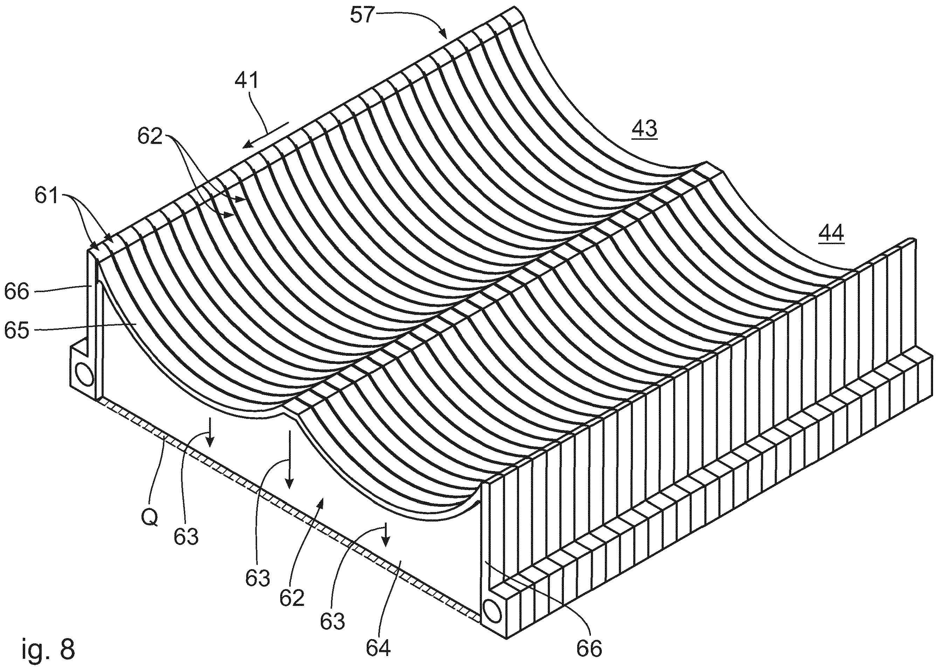

- Fig. 8: einen perspektivische Ansicht der aus mehreren Filterelementen aufgebauten Filtereinrichtung,

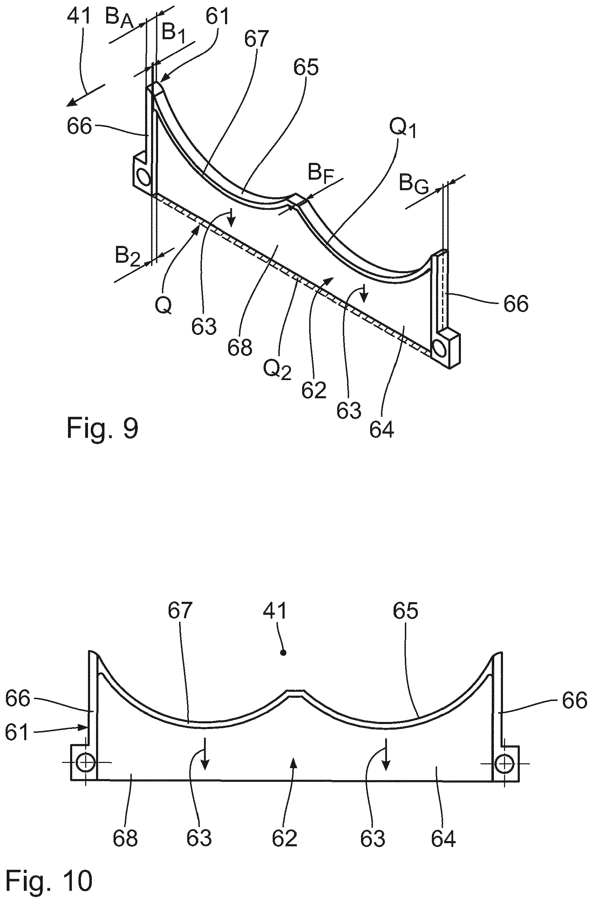

- Fig. 9: einen perspektivische Ansicht eines Filterelements in Fig. 8,
- Fig. 10: eine Frontansicht des Filterelements in Fig. 9,

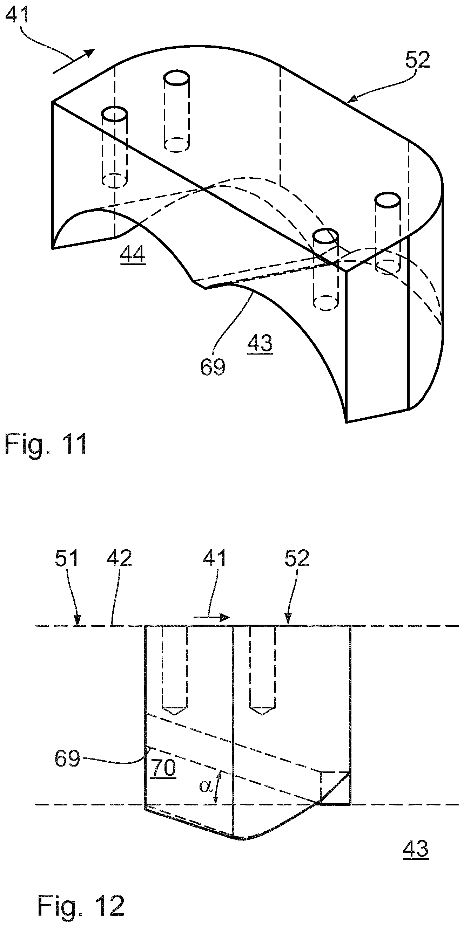

- Fig. 11: eine perspektivische Ansicht eines Einlaufelements der Zuführvorrichtung, und
- Fig. 12: eine Seitenansicht des Einlaufelements in Fig. 11.

Eine Spritzgießanlage 1 weist zur Herstellung von faserverstärkten Kunststoffteilen eine Spritzgießvorrichtung bzw. Spritzgießmaschine 2 zur Auf bereitung von Kunststoffmaterial 3 und eine Zuführvorrichtung 4 zum Zuführen von Fasern 5 auf.

Die Spritzgießvorrichtung 2 weist ein erstes Gehäuse 6 auf, in dem eine erste Gehäusebohrung 7 ausgebildet ist. An dem Gehäuse 6 ist eine Schließeinheit 8 befestigt, die eine an dem Gehäuse 6 befestigte Aufspannplatte 11 und ein Formwerkzeug 9 umfasst. Das Formwerkzeug 9 weist eine erste Formwerkzeughälfte F₁ auf, die an der Aufspannplatte 11 befestigt ist und zusammen mit einer zweiten Formwerkzeughälfte F₂ zur Herstellung von Kunststoffteilen einen Formhohlraum 10 bzw. eine Kavität ausbildet. Die Gehäusebohrung 7 mündet durch die Aufspannplatte 11 und die erste Formwerkzeughälfte F₁ in den Formhohlraum 10. Zum Entformen der hergestellten Kunststoffteile ist die zweite Formwerkzeughälfte F₂ relativ zu der ersten Formwerkzeughälfte F₁ in üblicher Weise axial verlagerbar. In der Gehäusebohrung 7 ist eine Spritzgieß-Schneckenwelle 12 konzentrisch angeordnet, die mittels einer üblichen Antriebs-Hub-Einrichtung 13 zum Aufschmelzen und Einspritzen des Kunststoffmaterials 3 in das Formwerkzeug 9 um eine erste Drehachse 14 drehantreibbar und entlang der ersten Drehachse 14 verlagerbar ist.

Die Spritzgießvorrichtung 2 bildet entlang einer Kunststoff-Förderrichtung 15 eine Einzugszone 16, eine Aufschmelzzone 17, eine Zuführzone 18 und eine Homogenisierungszone 19 aus. Zum Zuführen des Kunststoffmaterials 3 ist in der Einzugszone 16 eine erste Zuführöffnung 20 ausgebildet, durch die das Kunststoffmaterial 3 als Granulat in die Gehäusebohrung 7 zuführbar ist. Durch die Ausbildung der Spritzgieß-Schneckenwelle 12 wird das zugeführte Kunststoffmaterial 3 in der Aufschmelzzone 17 aufgrund der Drehung der Spritzgieß-Schneckenwelle plastifiziert. Im Bereich der nachgeordneten Zuführzone 18 ist in dem Gehäuse 6 eine zweite Zuführöffnung 21 zum Zuführen der Fasern 5 in die Gehäusebohrung 7 ausgebildet. In der nachfolgenden Homogenisierungszone 19 ist die Spritzgieß-Schneckenwelle 12 derart ausgebildet, dass die zugeführten Fasern 5 in das aufgeschmolzene Kunststoffmaterial 3 bzw. die Kunststoffschmelze einmischbar sind, sodass eine homogene Faser-Kunststoff-Mischung 22 entsteht. Endseitig der Homogenisierungszone 19 weist das Gehäuse 6 eine Austragsöffnung 23 auf, durch die die Faser-Kunststoff-Mischung 22 mittels der Antriebs-Hub-Einrichtung 13 in das Formwerkzeug 9 einspritzbar ist.

Die Spritzgießanlage 1 weist ein Bett 24 auf, auf dem die Spritzgießvorrichtung 2 und die Aufspannplatte 11 angeordnet sind. Die erste Formwerkzeughälfte F₁ ist fest an der Aufspannplatte 11 befestigt, wohingegen die zweite Formwerkzeughälfte F₂ zum Entformen eines hergestellten Kunststoffteils in üblicher Weise entlang der Kunststoff-Förderrichtung 15 verlagerbar ist. Zu Wartungs- bzw. Reparaturzwecken ist die Spritzgießvorrichtung 2 zusammen mit der daran befestigten Aufspannplatte 11 und der ersten Formwerkzeughälfte F₁ sowie zusammen mit der an der Spritzgießvorrichtung 2 befestigten Zuführvorrichtung 4 entlang der Kunststoff-Förderrichtung 15 auf Führungsschienen 25 verfahrbar. Das Verfahren erfolgt in üblicher Weise mittels einer Antriebseinrichtung 26.

Zum Einmischen der zugeführten Fasern 5 weist die Spritzgieß-Schneckenwelle 12 eine vergleichsweise größere Länge L auf. Für das Verhältnis der Länge L der Spritzgieß-Schneckenwelle 12 entlang der Drehachse 14 und ihrem Durchmesser D gilt: L/D ≥ 20, insbesondere L/D ≥ 25, insbesondere L/D ≥ 30, und insbesondere L/D ≥ 40. Zum Zuführen der Faser 5 weist die Spritzgieß-Schneckenwelle 12 in der Zuführzone 18 eine im Vergleich zu der Aufschmelzzone 17 höhere Gangtiefe auf. Der Freiraum zwischen der Spritzgieß-Schneckenwelle 12 und dem Gehäuse 6 ist somit vergleichsweise groß, sodass das aufgeschmolzene Kunststoffmaterial 3 im Wesentlichen drucklos an der Zuführöffnung 21 vorbeiführbar ist und die Fasern 5 einfach zuführbar sind. Die zweite Zuführöffnung 21 weist von der ersten Zuführöffnung 20 einen Abstand A₁ entlang der Drehachse 14 auf. Entsprechend weist die zweite Zuführöffnung 21 von der Austragsöffnung 23 einen Abstand A₂ entlang der Drehachse 14 auf. Für das Verhältnis der Abstände A₁ und A₂ gilt: 1 ≤ A₁/A₂ ≤ 4, insbesondere 1 ≤ A₁/A₂ ≤ 3, und insbesondere 1 ≤ A₁/A₂ ≤ 2. Hierdurch wird gleichermaßen eine ausreichend lange Aufschmelzzone 17 und Homogenisierungszone 19 gewährleistet. Zur Anpassung der Homogenisierungszone 19 an das Kunststoffmaterial 3 und/oder die Fasern 5 weist die Spritzgieß-Schneckenwelle 12 eine lösbar befestigte Schneckenspitze 27 auf, sodass mindestens ein Misch- und/oder Scherelement 28 der Spritzgieß-Schneckenwelle 12 austauschbar ist.

Die Zuführvorrichtung 4 dient zur Zuführung von Fasern 5 in die Spritzgießvorrichtung 2. Die Zuführvorrichtung 4 ist derart ausgebildet, dass geschnittene Fasern 5 durch die zweite Zuführöffnung 21 direkt in die Gehäusebohrung 7 zuführbar sind. Hierzu ist die Zuführvorrichtung 4 seitlich mittels eines Traggestells 29 an der Spritzgießvorrichtung 2 befestigt.

Die Zuführvorrichtung 4 weist eine Schneideinrichtung 30 auf, die zum Schneiden von Endlosfasern 31 dient. Durch das Schneiden der Endlosfasern 31 werden die geschnittenen Fasern 5 erzeugt. Die Schneideinrichtung 30 weist zum Schneiden der Endlosfasern 31 ein Schneidelement 32 und ein Anpresselement 33 auf, die rollenförmig ausgebildet sind und einen Spalt 34 begrenzen. Das Schneidelement 32 und das Anpresselement 33 sind drehbar an einem Grundgestell 35 gelagert, wobei das Anpresselement 33 mittels eines zugehörigen Antriebsmotors 36 drehantreibbar ist. Zum Schneiden der Endlosfasern 31 weist das Schneidelement 32 einen walzenförmigen Grundkörper 37 auf, an dem über den Umfang verteilt mehrere Schneidmesser 38 befestigt sind. Der Antriebsmotor 36 wird mittels einer Steuereinrichtung 39 zur Steuerung der Spritzgießanlage 1 angesteuert, sodass die Antriebsdrehzahl n_{A} einstellbar ist. Das Schneidelement 32 liegt gegen das Anpresselement 33 an, sodass dieses bei einer Rotation des Anpresselements 33 mit einer der Antriebsdrehzahl n_{A} entsprechenden Drehzahl n_{M} mitrotiert. Hierdurch ist die Menge der erzeugten Fasern 5 einstellbar bzw. dosierbar. Über die Anzahl bzw. den Abstand der Schneidmesser 38 ist die Faserlänge der Fasern 5 einstellbar. Vorzugsweise werden mittels der Schneideinrichtung 30 Fasern 5 mit einer Faserlänge von 2 mm bis 100 mm, insbesondere von 15 mm bis 50 mm erzeugt. Die Endlosfasern 31 werden der Schneideinrichtung 30 über eine nicht näher dargestellte Spule bzw. Spulen zugeführt. Der Anpressdruck zwischen dem Schneidelement 32 und dem Anpresselement 33 ist einstellbar, indem das Schneidelement 32 relativ zu dem Anpresselement 33 verlagerbar ist. Hierdurch können mehrere Endlosfasern 31 gleichzeitig geschnitten werden, insbesondere dann, wenn die Strecke zwischen den Faserrovings bzw. Spulen und der Schneideinrichtung 30 vergleichsweise lang ist.

Der Schneideinrichtung 30 ist eine Zweiwellen-Schneckenmaschine 40 bzw. Doppelwellen-Schneckenmaschine nachgeordnet. Die Zweiwellen-Schneckenmaschine 40 definiert eine Faser-Zuführrichtung 41 der geschnittenen Fasern 5. Die Zweiwellen-Schneckenmaschine 40 dient zur seitlichen Zuführung der Fasern 5 in die Spritzgießvorrichtung 2 und wird dementsprechend auch als Seitenbeschickungsmaschine bezeichnet. Die Schneckenmaschine 40 weist ein zweites Gehäuse 42 auf, in dem zwei einander durchdringende zweite Gehäusebohrungen 43, 44 ausgebildet sind. Die Gehäusebohrungen 43, 44 verlaufen parallel zueinander. In den Gehäusebohrungen 43, 44 ist jeweils eine zugehörigen Zuführ-Schneckenwelle 45, 46 konzentrisch zu der jeweiligen Gehäusebohrung 43 bzw. 44 angeordnet. Die Zuführ-Schneckenwellen 45, 46 sind über ein Verzweigungsgetriebe 47 mittels eines Antriebsmotors 48 gleichsinnig, also in gleichen Drehrichtungen um eine jeweils zugehörige Drehachse 49 bzw. 50 drehantreibbar. Die Drehzahl n_{S} der Zuführ-Schneckenwellen 45, 46 ist mittels der Steuereinrichtung 39 einstellbar.

Zum Zuführen der mittels der Schneideinrichtung 30 geschnittenen Fasern 5 in die Schneckenmaschine 40 ist an einer der Schneideinrichtung 30 zugewandten Oberseite des Gehäuses 42 eine Faser-Zuführöffnung 51 ausgebildet. Die Faser-Zuführöffnung 51 ist in der Faser-Zuführrichtung 41 durch ein Einlaufelement 52 begrenzt. Das Einlaufelement 52 ist nachfolgend noch genauer beschrieben. Zum Austragen der Fasern 5 aus der Schneckenmaschine 40 bilden die Gehäusebohrungen 43, 44 stirnseitig an dem Gehäuse 42 einen Faser-Austragsöffnung 53 aus.

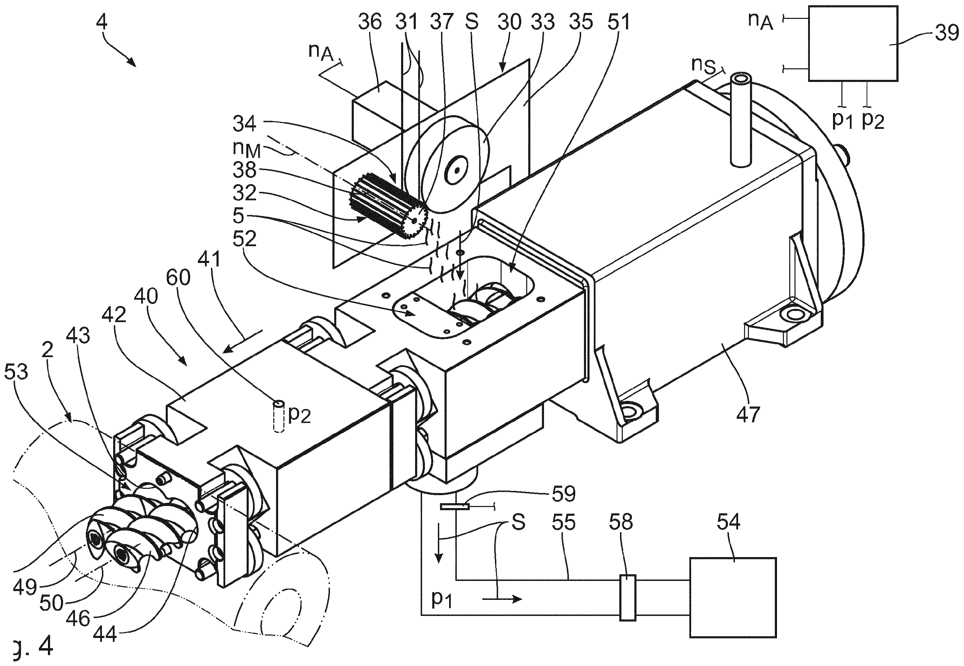

Zum Einsaugen der Fasern 5 in die Schneckenmaschine 40 weist die Zuführvorrichtung 4 eine Saugeinrichtung 54 auf. Die Saugeinrichtung 54 ist über eine Saugleitung 55 mit einer Saugöffnung 56 verbunden, die in dem Gehäuse 42 ausgebildet ist. Die Saugeinrichtung 54 und die Saugleitung 55 sind in Fig. 4 lediglich schematisch dargestellt.

Die Saugöffnung 56 ist an einer der Faser-Zuführöffnung 51 gegenüberliegenden Unterseite des Gehäuses 42 ausgebildet und in der Faser-Zuführrichtung 41 bzw. in Richtung der Drehachsen 49, 50 um einen Abstand x versetzt zu der Faser-Zuführöffnung 51 angeordnet. Mittels der Saugeinrichtung 54 ist ein Luftstrom S erzeugbar, der durch die Faser-Zuführöffnung 51, die Gehäusebohrungen 43, 44, die Saugöffnung 56 und die Saugleitung 55 verläuft. Um einen Eintritt der mittels des Luftstroms S angesaugten Fasern 5 in die Saugleitung 55 zu verhindern, ist in der Saugöffnung 56 eine Filtereinrichtung 57 zum Ausfiltern der Fasern 5 aus dem Luftstrom S angeordnet. Die Filtereinrichtung 57 ist nachfolgend noch im Detail beschrieben.

Zum Schutz der Saugeinrichtung 54 vor Fasern 5, die durch die Filtereinrichtung 57 in die Saugleitung 55 gelangen, ist in der Saugleitung 55 ein Faserfilter 58 angeordnet. Der Faserfilter 58 ist einfach auswechselbar und ist insbesondere Teil einer nicht näher dargestellten Filterwechseleinrichtung, die durch einfache lineare Verschiebung einen Wechsel eines Faserfilters 58 durch einen neuen Faserfilter 58 ermöglicht. Um ein Zusetzen der Filtereinrichtung 57 und/oder des Faserfilters 58 zu detektieren, ist in der Saugleitung 55 ein Drucksensor 59 zur Überwachung des Luftdrucks p₁ zwischen der Filtereinrichtung 57 und dem Faserfilter 58 angeordnet. Der Drucksensor 59 ist in Signalverbindung mit der Steuereinrichtung 39, die die Messwerte für den Luftdruck p₁ auswertet. Darüber hinaus ist in dem Gehäuse 42 zwischen der Faser-Austragsöffnung 53 und der Filtereinrichtung 57 ein als Drucksensor 60 ausgebildeter Überwachungssensor angeordnet, der den Druck p₂ in den Gehäusebohrungen 43, 44 misst. Der Drucksensor 60 ist in Signalverbindung mit der Steuereinrichtung 39, die die Messwerte für den Druck p₂ auswertet. Der Drucksensor 60 dient zur Detektierung eines Rückstaus des in der Spritzvorrichtung 2 befindlichen Kunststoffmaterials 3 durch die Faser-Austragsöffnung 53 entgegen der Faser-Zuführrichtung 41 in die Gehäusebohrungen 43, 44.

Zur direkten Zuführung der Fasern 5 in die Gehäusebohrung 7 ist das zweite Gehäuse 42 unmittelbar an dem ersten Gehäuse 6 befestigt, sodass die zweiten Gehäusebohrungen 43, 44 unmittelbar in die erste Gehäusebohrung 7 münden. Hierzu hat die zweite Zuführöffnung 21 im Querschnitt die Form einer liegenden Acht, sodass sich die Zuführ-Schneckenwellen 45, 46 bis in die zweite Zuführöffnung 21 erstrecken können. Durch das Traggestell 29 ist das zweite Gehäuse 42 derart mit dem ersten Gehäuse 6 befestigt, dass diese miteinander einen Winkel ϕ relativ zu einer horizontalen Ebene E einschließen, wobei gilt: 0° ≤ ϕ ≤ 90°, insbesondere 0° ≤ ϕ ≤ 60° und insbesondere 0° ≤ ϕ ≤ 45°.

Die Filtereinrichtung 57 ist aus mehreren gleichartigen Filterelementen 61 aufgebaut, die in der Faser-Zuführrichtung 41 bzw. in Richtung der Drehachsen 49, 50 nacheinander angeordnet sind. Die Filterelemente 61 sind aus einem Metall ausgebildet, vorzugsweise aus Stahl oder Aluminium. Jeweils zwei benachbarte Filterelemente 61 begrenzen einen spaltförmigen Strömungskanal 62, dessen Querschnitt im Wesentlichen quer zu der Faser-Zuführrichtung 41 verläuft. Das in der Faser-Zuführrichtung 41 letzte Filterelement 61 begrenzt mit dem Gehäuse 42 einen entsprechenden Strömungskanal 62. Die Strömungskanäle 62 weisen in einer senkrecht zu der Faser-Zuführrichtung 41 verlaufenden Strömungsrichtung 63 einen sich erweiternden Strömungsquerschnitt Q. Jedes der Filterelemente 61 weist zur Ausbildung des zugehörigen Strömungskanals 62 eine Grundplatte 64 auf, an der an einer den Gehäusebohrungen 43, 44 zugewandten Seite ein Filtersteg 65 und seitlich davon zwei Abstandshalter 66 angeordnet sind. Der Filtersteg 65 verläuft zur Ausbildung des spaltförmigen Strömungskanals 62 quer zu der Faser-Zuführrichtung 41. Um ein sauberes Abstreifen der Fasern 5 von der Filtereinrichtung 57 bzw. den Filterstegen 65 zu ermöglichen, weisen die Filterstege 65 sowie die Grundplatten 64 eine den Gehäusebohrungen 43, 44 entsprechende Querschnittsform auf. Die Abstandshalter 66 sind stegförmig ausgebildet und seitlich an dem zugehörigen Filtersteg 65 angeordnet, sodass diese in der Strömungsrichtung 63 verlaufen und den zugehörigen Strömungskanal 62 seitlich begrenzen. Die Abstandshalter 66 weisen in der Faser-Zuführrichtung 41 eine Breite B_{A} auf, die größer als eine Breite B_{F} des zugehörigen Filterstegs 65 und größer als eine Breite B_{G} der zugehörigen Grundplatte 64 in der Faser-Zuführrichtung 41 ist. Liegt ein Filterelement 67 mit seinen Abstandshaltern 66 gegen die Grundplatte 64 eines benachbarten Filterelements 61 an, so wird hierdurch der zugehörige Strömungskanal 62 ausgebildet. Dadurch, dass die Breite B_{F} des Filterstegs 65 größer als die Breite B_{G} der Grundplatte 64 ist, erweitert sich der Strömungsquerschnitt Q des jeweiligen Strömungskanals 62 in der Strömungsrichtung 63 stufenförmig. Der jeweilige Strömungskanal 62 weist einen ersten Kanalabschnitt 67 auf, dessen Querschnitt Q₁ von dem Filtersteg 65 und den Abstandshaltern 66 sowie der Grundplatte 64 des benachbarten Filterelements 61 begrenzt wird. Der erste Kanalabschnitt 67 weist in der Faser-Zuführrichtung 41 eine minimale erste Kanalbreite B₁, die sich aus der Differenz zwischen den Breiten B_{A} und B_{F} ergibt. Für die Kanalbreite B₁ gilt: 0,01 mm ≤ B₁ ≤ 0,04 mm und insbesondere 0,05 mm ≤ B₁ ≤ 0,2 mm. Dem ersten Kanalabschnitt 67 ist in der Strömungsrichtung 63 ein zweiter Kanalabschnitt 68 nachgeordnet, der eine minimale zweite Kanalbreite B₂ aufweist, die sich aus der Differenz zwischen den Breiten B_{A} und B_{G} ergibt. Für die zweite Kanalbreite B₂ gilt: 0,5 mm ≤ B₂ ≤ 3,0 mm und insbesondere 0,8 mm ≤ B₂ ≤ 2,0 mm. Der Querschnitt Q₂ des zweiten Kanalabschnitts 68 wird durch die Grundplatte 64 und die Abstandshalter 66 eines Filterelements 61 und die Grundplatte 64 des benachbarten Filterelements 61 begrenzt. Für die Breite B_{G} gilt: B_{G} ≤ 1,5 mm, insbesondere B_{G} ≤ 1,0 mm und insbesondere B_{G} ≤ 0,5 mm.

Das Einlaufelement 52 dient zur Verbesserung des Einzugsverhaltens der Schneckenmaschine 40. Das Einlaufelement 52 weist eine den Gehäusebohrungen 43, 44 zugewandte Einlaufwand 69 auf. Die Einlaufwand 69 bildet - in einem Vertikallängsschnitt parallel zu den Drehachsen 49 bzw. 50 betrachtet - eine geradlinig verlaufende Einlaufschräge aus. Die Einlaufwand 69 schließt mit der Faser-Zuführrichtung 41 - in dem Vertikallängsschnitt betrachtet - einen Winkel α ein, für den gilt: 5° ≤ α ≤ 20°. Das Einlaufelement 52 bildet somit im Bereich der Einlaufwand 69 einen Einlaufkeil 70 aus, der sich in der Faser-Zuführrichtung 41 verjüngt. Im Querschnitt betrachtet weist die Einlaufwand 69 eine den Gehäusebohrungen 43, 44 entsprechende Querschnittsform auf, sodass die Einlaufwand 69 bündig mit den Gehäusebohrungen 43, 44 ausläuft. Das Einlaufelement 52 ist auswechselbar an dem Gehäuse 42 befestigt. Alternativ kann das Einlaufelement integriert mit dem Gehäuse ausgebildet sein.

Die Funktionsweise der Spritzgießanlage 1 ist wie folgt:
Die Spritzgießvorrichtung 2 und die Zuführvorrichtung 4 werden mittels der Steuereinrichtung 39 diskontinuierlich betrieben. Zu Herstellung eines faserverstärkten Kunststoffteils wird zunächst Kunststoffmaterial 3 in Form von Granulat durch die erste Zuführöffnung 20 in die Einzugszone 16 gegeben. Durch die Drehung der Spritzgieß-Schneckenwelle 12 wird das Kunststoffmaterial 3 in der Kunststoff-Förderrichtung 15 in die Auf schmelzzone 17 gefördert, wo das Granulat in eine Schmelze aufgeschmolzen wird.

In der Zuführzone 18 werden dem aufgeschmolzenen Kunststoffmaterial 3 mittels der Zuführvorrichtung 4 geschnittene Fasern 5 zugeführt. Hierzu werden zunächst die bereit gestellten Endlosfasern 31 mittels der Schneideinrichtung 30 zu Fasern 5 mit einer gewünschten Faserlänge geschnitten. Die Faserlänge beträgt vorzugsweise zwischen 2 mm und 100 mm und insbesondere zwischen 15 mm und 50 mm. Durch die Drehzahlen n_{A} bzw. n_{M} ist eine Dosierung der Fasern 5 möglich. Die geschnittenen Fasern 5 werden von dem Luftstrom S der mittels der Saugeinrichtung 54 erzeugt wird, durch die Faser-Zuführöffnung 51 in die Gehäusebohrungen 43, 44 eingesaugt.

Der Luftstrom S verläuft die Faser-Zuführöffnung 51, die Gehäusebohrungen 43, 44, die in der Saugöffnung 56 angeordnete Filtereinrichtung 57, die Saugleitung 55 und den Faserfilter 58 zu der Saugeinrichtung 54. Dadurch, dass die Saugöffnung 56 um den Abstand x versetzt zu der Faser-Zuführöffnung 51 angeordnet ist, werden die von dem Luftstrom S mitgenommenen Fasern 5 beim Einsaugen bereits in die Faser-Zuführrichtung 41 umgelenkt. Aufgrund der von der Einlaufwand 69 ausgebildeten Einlaufschräge können die Fasern 5 frühzeitig in die Faser-Zuführrichtung 41 umgelenkt und von den Zuführ-Schneckenwellen 45, 46 erfasst und in Richtung der Faser-Austragsöffnung 53 gefördert werden. Die übrigen Fasern 5 werden an den Zuführ-Schneckenwellen 45, 46 vorbei zu der Filtereinrichtung 57 gesaugt, wo die Fasern 5 von dem Luftstrom S abgetrennt werden. Die auf der Filtereinrichtung 57 zu liegen kommenden Fasern 5 werden aufgrund der den Gehäusebohrungen 43, 44 entsprechenden Querschnitteformen der Filtereinrichtung 57 von dieser abgestreift und in der Faser-Zuführrichtung 41 abtransportiert. Hierzu weisen die Zuführ-Schneckenwellen 45, 46 in einem als Einzugsbereich bezeichneten Bereich zwischen der Faser-Zuführöffnung 51 und dem in der Faser-Zuführrichtung 41 liegenden Ende der Filtereinrichtung 57 eine im Vergleich zum restlichen Teil der Zuführ-Schneckenwellen 45, 46 höheres Gangvolumen auf. Die Fasern 5 gelangen so leichter in die Schneckengänge und werden besser in der Faser-Zuführrichtung 41 gefördert. Das höhere Gangvolumen wird beispielsweise durch eingängige Schneckenelemente mit einer Steigung von mindestens dem 1,2- bis 1,8-fachen des Schneckendurchmessers erreicht. Durch den Luftstrom S bzw. die Saugförderung werden die leichten, nicht rieselfähigen und vergleichsweise langen Fasern 5 unter die Zuführ-Schneckenwellen 45, 46 gesaugt, wodurch die Fasern 5 von den Zuführ-Schneckenwellen 45, 46 erfasst und gefördert werden können.

Aufgrund der Ausbildung der Strömungskanäle 62 wird ein Zusetzen der Filtereinrichtung 57 wirkungsvoll verhindert, sodass die Filtereinrichtung 57 robust und zuverlässig ist und eine lange Standzeit aufweist. Dadurch, dass die spaltförmigen Strömungskanäle 62 im Querschnitt quer zu der Faser-Zuführrichtung 41 verlaufen, sind die Fasern 5 mit ihrer Faserlänge in Richtung der minimalen Kanalbreite B₁ der ersten Kanalabschnitte 67 orientiert. Hierdurch wird die Wahrscheinlichkeit erniedrigt, dass eine Faser 5 in den ersten Kanalabschnitt 67 eintritt. Fasern 5, die dennoch in einen der ersten Kanalabschnitte 67 eintreten, können aufgrund des breiteren zweiten Kanalabschnitts 68 aus dem ersten Kanalabschnitt 67 abgesaugt und aus der Filtereinrichtung 57 abgeführt werden. Ein Zusetzen der Filtereinrichtung 57 wird somit verhindert. Die durch die Filtereinrichtung 57 durchgesaugten Fasern 5 werden mittels des Faserfilters 58 aus dem Luftstrom S ausgefiltert.

Der Drucksensor 59 misst den Luftdruck p₁ in der Saugleitung 55 und übermittelt die Messwerte an die Steuereinrichtung 39, die diese auswertet. Nimmt der Luftdruck p₁ in der Saugleitung 55 zu, so erkennt die Steuereinrichtung 39, dass der Faserfilter 58 einen vergleichsweise hohen Strömungswiderstand aufweist und ausgewechselt werden muss. Nimmt der Luftdruck p₁ in der Saugleitung 55 demgegenüber ab, so erkennt die Steuereinrichtung 39, dass die Filtereinrichtung 57 eine vergleichsweise hohen Strömungswiderstand aufweist gewartet werden muss. Die Steuereinrichtung 39 gibt in diesem Fall ein entsprechendes Überwachungssignal ab.

Der Drucksensor 60 misst den Druck p₂ in den Gehäusebohrungen 43, 44. Tritt Kunststoffmaterial 3 aus der Spritzgießvorrichtung 2 durch die Faser-Austragsöffnung 53 entgegen der Faser-Zuführrichtung 41 in die Gehäusebohrungen 43, 44 ein, so besteht die Gefahr, dass das Kunststoffmaterial 3 bzw. die Kunststoffschmelze die Filtereinrichtung 57 verstopft. Die Steuereinrichtung 39 wertet die Messwerte des Drucks p₂ aus und erkennt, wenn Kunststoffmaterial 3 bis zu der Position des Drucksensors 60 gelangt ist. Die Steuereinrichtung 39 gibt in diesem Fall ein entsprechendes Warnsignal ab. Ein Bediener kann aufgrund des Warnsignals Gegenmaßnahmen einleiten.

Die geschnittenen Fasern 5 gelangen mittels der Zuführvorrichtung 4 durch die Faser-Austragsöffnung 53 bzw. die zweite Zuführöffnung 21 direkt in die Zuführzone 18. Dadurch, dass die Spritzgieß-Schneckenwelle 12 in der Zuführzone 18 eine vergleichweise größere Gangtiefe bzw. ein vergleichsweise größeres Gangvolumen aufweist, wird das aufgeschmolzene Kunststoffmaterial 3 im Wesentlichen drucklos an der zweiten Zuführöffnung 21 vorbei gefördert, sodass die geschnittenen Fasern 5 einfach zugeführt werden können. Die zugeführten Fasern 5 werden von der Spritzgieß-Schneckenwelle 12 mitgenommen und in die Homogenisierungszone 19 gefördert, wo mittels des Misch- und Scherelements 28 eine intensive Durchmischung und Homogenisierung stattfindet, sodass eine homogene Kunststoff-Faser-Mischung 22 entsteht. Die Kunststoff-Faser-Mischung 22 sammelt sich zunächst vor der geschlossenen Austragsöffnung 23, wodurch die Spritzgieß-Schneckenwelle 12 in üblicher Weise in Richtung der Antriebs-Hub-Einrichtung 13 bewegt wird. Um eine zuverlässige Zuführung der Fasern 5 zu gewährleisten, weist die Spritzgieß-Schneckenwelle 12 in einem Bereich, der ungefähr dem Hub der Spritzgieß-Schneckenwelle 12 entspricht, ein höheres Gangvolumen auf. Dieser Bereich bildet die Zuführzone 18 aus.

Steht eine ausreichende Menge der Kunststoff-Faser-Mischung 22 bereit, so wird das Zuführen der Fasern 5 sowie des Kunststoffmaterials 3 gestoppt. Die Austragsöffnung 23 wird geöffnet und die bereitstehende Kunststoff-Faser-Mischung 22 durch eine lineare Bewegung der Spritzgieß-Schneckenwelle 12, die mittels der Antriebs-Hub-Einrichtung 13 durchgeführt wird, in den Formhohlraum 10 des Formwerkzeugs 9 eingespritzt.

Anschließend wird das in dem Formwerkzeug 9 entstandene faserverstärkte Kunststoffteil entformt. Hierzu wird die zweite Formwerkzeughälfte F₂ relativ zu der ersten Formwerkzeughälfte F₁ linear verfahren, sodass das Kunststoffteil aus dem Formwerkzeug 9 entformt und entnommen werden kann.

Mit der erfindungsgemäßen Spritzgießanlage 1 ist es möglich, Fasern 5 in beliebiger Menge und mit einer beliebigen Faserlänge direkt in ein Kunststoffmaterial 3 in einer Spritzgießvorrichtung 2 bzw. Spritzgießmaschine einzuarbeiten, ohne dass ein Zwischenschritt erforderlich wäre. Neben geschnittenen Fasern 5 ist es möglich, bereits geschnittene Fasern 5 oder andere Verstärkungsstoffe bzw. -fasern einzuarbeiten, wie beispielsweise Holzfasern oder Faserschnitzel. Zusätzlich können Additive und/oder Zuschlagsstoffe eingearbeitet werden.

Zur direkten Zuführung und Einarbeitung der Fasern 5 ist das Spritzgießaggregat bzw. die Spritzgieß-Schneckenwelle 12 im Vergleich zu einer Standardausführung verlängert. Die Zuführvorrichtung 4 kann entweder direkt oder über einen Adapter an der Spritzgießvorrichtung 2 befestigt werden.

Die Schneckenspitze 27 mit der Rückstromsperre und das bzw. die Misch- und/oder Scherelemente 28 sind abschraubbar, sodass an die Fasern 5 und/oder das Kunststoffmaterial 3 angepasste Misch- und/oder Scherelemente 28 eingebaut werden können, um eine optimale Verteilung der Fasern 5 ohne eine Schädigung zu ermöglichen. Die Schneideinrichtung 30, die Mehrwellen-Schneckenmaschine 40 und die Spritzgießvorrichtung 2 sind derart aufeinander abgestimmt, dass sich während der Dosierphase ein gleichmäßiger Anteil von Fasern 5 im plastifizierten Kunststoffmaterial 3 ergibt. Alternativ kann die Spritzgießvorrichtung 2 bzw. die Spritzgießmaschine eine Spritzgieß-Schneckenwelle 12 mit fest ausgebildeten bzw. angeordneten Misch- und/oder Scherelementen 28 aufweisen, die also nicht austauschbar sind. Hierdurch kann die Spritzgießvorrichtung 2 hinsichtlich des Aufbaus und der Kosten auf einen bestimmen Einsatzzweck optimiert werden. Durch den einteiligen Aufbau der Spritzgieß-Schneckenwelle 12 wird insbesondere die Zuverlässigkeit der Spritzgießvorrichtung 2 erhöht, da eine Ablagerung von Kunststoffmaterial 3 an der Spritzgieß-Schneckenwelle 12 erschwert ist.

Durch die Zuführvorrichtung 4 können die geschnittenen Fasern 5 bzw. die Schnittfasern mit einer einstellbaren Faserlänge mittels der Schneideinrichtung 30 erzeugt und trocken, also ohne plastifiziertes Kunststoffmaterial 3, über die Zweiwellen-Schneckenmaschine 40 der schmelzeführenden bzw. kunststoffführenden Spritzgießvorrichtung 2 definiert zugeführt werden. Die der Spritzgießvorrichtung 2 zugeführten Fasern 5 können auf diese Weise direkt in das Kunststoffmaterial 3 bzw. das Matrixpolymer eingearbeitet werden, um Halbzeuge und/oder Kunststoffteile bzw. -formteile in dem nachgeordneten Fertigungsschritt herzustellen.

Bei den Fasern 5 handelt es sich um Verstärkungsfasern, wie beispielsweise Kohlefasern, Kunststofffasern, Glasfasern und/oder Naturfasern. Mit der Zuführvorrichtung 4 ist insbesondere eine Zuführung von langen Schnittfasern möglich, die eine sehr geringe Schüttdichte und eine nur schlechte bis keine Rieselfähigkeit aufweisen und dementsprechend schwierig zu dosieren, einzuziehen und zu fördern sind.

## Patentansprüche

1. Spritzgießanlage zur Herstellung von faserverstärkten Kunststoffteilen, umfassend
- eine Spritzgießvorrichtung (2) mit
-- einem ersten Gehäuse (6),
-- einer in dem ersten Gehäuse (6) ausgebildeten ersten Gehäusebohrung (7),
-- einer ersten Zuführöffnung (20) zum Zuführen von Kunststoffmaterial (3) in die erste Gehäusebohrung (7),
-- einer Schneckenwelle (12) zum Aufschmelzen und Einbringen des Kunststoffmaterials (3) in ein Formwerkzeug (9), die in der ersten Gehäusebohrung (7) angeordnet und um eine zugehörige erste Drehachse (14) drehantreibbar ist,
-- einer zweiten Zuführöffnung (21) zum Zuführen von Fasern (5) in die erste Gehäusebohrung (7),
-- einer Austragsöffnung (23) zum Austragen des Kunststoffmaterials (3) und der Fasern (5) aus der ersten Gehäusebohrung (7) in das Formwerkzeug (9), und
- eine Zuführvorrichtung (4) zur Zuführung der Fasern (5) in das in der Spritzgießvorrichtung (2) befindliche Kunststoffmaterial (3), die derart ausgebildet ist, dass geschnittene Fasern (5) durch die zweite Zuführöffnung (21) in die erste Gehäusebohrung (7) zuführbar sind, **dadurch gekennzeichnet,**
**dass** die Zuführvorrichtung (4) umfasst:
- eine Mehrwellen-Schneckenmaschine (40) mit
-- einem zweiten Gehäuse (42),
-- mehreren einander durchdringenden zweiten Gehäusebohrungen (43,44),
-- mehreren in den zweiten Gehäusebohrungen (43, 44) konzentrisch angeordneten und um zugehörige zweite Drehachsen (49, 50) drehantreibbaren Zuführ-Schneckenwellen (45, 46),
-- einer Faser-Zuführöffnung (51) zum Zuführen der Fasern (5) in die zweiten Gehäusebohrungen (43, 44), und
-- einer Faser-Austragsöffnung (53) zum Austragen der Fasern (5) aus den zweiten Gehäusebohrungen (43, 44),eine Saugeinrichtung (54) zum Einsaugen der Fasern (5) durch die Faser-Zuführöffnung (51) in die zweiten Gehäusebohrungen (43, 44) mittels eines Luftstroms (S), und
- eine zwischen der Saugeinrichtung (54) und den zweiten Gehäusebohrungen (43, 44) angeordnete Filtereinrichtung (57) zum Ausfiltern der Fasern (5) aus dem Luftstrom (S), wobei die Filtereinrichtung (57) mehrere Strömungskanäle (62) ausbildet, die in einer Strömungsrichtung (63) des Luftstroms (S) jeweils einen sich erweiternden Strömungsabschnitt (Q) aufweisen.

2. Spritzgießanlage nach Anspruch 1, **dadurch gekennzeichnet,**
**dass** die Zuführvorrichtung (4) eine als Zweiwellen-Schneckenmaschine (40) ausgebildete Mehrwellen-Schneckenmaschine aufweist, und
**dass** die Zweiwellen-Schneckenmaschine (40) gleichsinnig drehantreibbare Zuführ-Schneckenwellen (45, 46) aufweist.

3. Spritzgießanlage nach Anspruch 1 oder 2, **dadurch gekennzeichnet, dass** das zweite Gehäuse (42) an dem ersten Gehäuse (6) befestigt ist und die zweiten Gehäusebohrungen (43, 44) in die erste Gehäusebohrung (7) münden.

4. Spritzgießanlage nach einem der Ansprüche 1 bis 3, **dadurch gekennzeichnet,**
**dass** die zweite Zuführöffnung (21) im Querschnitt die Form einer Acht aufweist und sich die Zuführ-Schneckenwellen (45, 46) bis in die zweite Zuführöffnung (21) erstrecken.

5. Spritzgießanlage nach einem der Ansprüche 1 bis 4, **dadurch gekennzeichnet,**
**dass** das zweite Gehäuse (42) an dem ersten Gehäuse (6) befestigt ist und mit einer horizontalen Ebene (E) einen Winkel ϕ einschließt, wobei gilt: 0° ≤ ϕ ≤ 90°, insbesondere 0° ≤ ϕ ≤ 60° und insbesondere 0° ≤ ϕ ≤ 45°.

6. Spritzgießanlage nach einem der Ansprüche 1 bis 5, **dadurch gekennzeichnet,**
**dass** die Schneckenwelle (12) eine Länge L entlang der ersten Drehachse (14) und einen Durchmesser D aufweist, wobei gilt: L/D 20, insbesondere L/D 25, insbesondere L/D 30, und insbesondere L/D ≥ 40.

7. Spritzgießanlage nach einem der Ansprüche 1 bis 6, **dadurch gekennzeichnet,**
**dass** die zweite Zuführöffnung (21) von der ersten Zuführöffnung (20) einen Abstand A₁ und von der Austragsöffnung (23) einen Abstand A₂ aufweist, wobei gilt: 1 ≤ A₁/ A₂ ≤ 4, insbesondere 1 ≤ A₁/ A₂ ≤ 3, und insbesondere 1 ≤ A₁/ A₂ ≤ 2.

8. Spritzgießanlage nach einem der Ansprüche 1 bis 7, **dadurch gekennzeichnet,**
**dass** die Spritzgießvorrichtung (2) eine Aufschmelzzone (17) und eine in einer Kunststoff-Förderrichtung (15) nachgeordnete Zuführzone (18) aufweist und die Schneckenwelle (12) in der Zuführzone (18) eine im Vergleich zu der Aufschmelzzone (17) höhere Gangtiefe aufweist.

9. Spritzgießanlage nach einem der Ansprüche 1 bis 8, **dadurch gekennzeichnet,**
**dass** die Spritzgießvorrichtung (2) eine Zuführzone (18) und eine in einer Kunststoff-Förderrichtung (15) nachgeordnete Homogenisierungszone (19) aufweist und die Schneckenwelle (12) in der Homogenisierungszone (19) mindestens ein Misch- und/oder Scherelement (28) auf weist.

10. Spritzgießanlage nach Anspruch 9, **dadurch gekennzeichnet,**
**dass** das mindestens eine Misch- und/oder Scherelement (28) austauschbar ist.

11. Spritzgießanlage nach einem der Ansprüche 1 bis 10, **dadurch gekennzeichnet,**
**dass** die Spritzgießvorrichtung (2) und die Zuführvorrichtung (4) gemeinsam auf einem Bett (24) verfahrbar sind.

12. Spritzgießanlage nach einem der Ansprüche 1 bis 11, **dadurch gekennzeichnet,**
**dass** die Strömungskanäle (62) einen sich stufenförmig erweiternden Strömungsquerschnitt (Q) aufweisen.

13. Spritzgießanlage nach einem der Ansprüche 1 bis 12, **dadurch gekennzeichnet,**
**dass** die Filtereinrichtung (57) mehrere aneinander anliegende Filterelemente (61) aufweist und benachbarte Filterelemente (61) jeweils einen im Querschnitt spaltförmigen Strömungskanal (62) ausbilden.

14. Spritzgießanlage nach einem der Ansprüche 1 bis 13, **dadurch gekennzeichnet,**
**dass** die Zuführvorrichtung (4) einen Überwachungssensor (60) zur Detektion eines Rückstaus des Kunststoffmaterials (3) aufweist.

15. Spritzgießanlage nach einem der Ansprüche 1 bis 14, **dadurch gekennzeichnet,**
**dass** die Zuführvorrichtung (4) eine Schneideinrichtung (30) zum Schneiden von Endlosfasern (31) in Fasern (5) mit einstellbarer Faserlänge aufweist.

16. Spritzgießverfahren zur Herstellung von faserverstärkten Kunststoffteilen mit den Schritten:
- Bereitstellen einer Spritzgießanlage (1) nach einem der Ansprüche 1 bis 15,
- Zuführen von Kunststoffmaterial (3) durch die erste Zuführöffnung (20) in die Spritzgießvorrichtung (2),
- Aufschmelzen des Kunststoffmaterials (3) in der Spritzgießvorrichtung (2),
- Zuführen von Fasern (5) mittels der Zuführvorrichtung (4) durch die zweite Zuführöffnung (21) in das aufgeschmolzene Kunststoffmaterial (3),
- Einmischen der zugeführten Fasern (5) in das Kunststoffmaterial (3) mittels der Schneckenwellen (12), und
- Einbringen der Mischung aus Kunststoffmaterial (3) und Fasern (5) in das Formwerkzeug (9) zur Herstellung eines faserverstärkten Kunststoffteils.

## Claims

1. Injection molding system for producing fiber-reinforced plastics material parts, comprising
- an injection molding device (2) with
-- a first housing (6),
-- a first housing bore (7) formed in the first housing (6),
-- a first feed opening (20) for feeding plastics material (3) into the first housing bore (7),
-- a screw shaft (12) for melting and introducing the plastics material (3) into a mold (9), which is arranged in the first housing bore (7) and is rotatably drivable about an associated first rotational axis (14),
-- a second feed opening (21) for feeding fibers (5) into the first housing bore (7),
-- a discharge opening (23) for discharging the plastics material (3) and the fibers (5) from the first housing bore (7) into the mold (9), and
- a feed device (4) for feeding the fibers (5) into the plastics material (3) located in the injection molding device (2),the feed device (4) being configured in such a way that cut fibers (5) are feedable through the second feed opening (21) into the first housing bore (7), **characterized**
**in that** the feed device (4) comprises:
- a multi-shaft screw machine (40) with
-- a second housing (42),
-- a plurality of second housing bores (43, 44) penetrating one another,
-- a plurality of feed screw shafts (45, 46), which are concentrically arranged in the second housing bores (43, 44) and are rotatably drivable about associated second rotational axes (49, 50),
-- a fiber feed opening (51) for feeding the fibers (5) into the second housing bores (43, 44), and
-- a fiber discharge opening (53) for discharging the fibers (5) from the second housing bores (43, 44), a suction mechanism (54) for sucking the fibers (5) through the fiber feed opening (51) into the second housing bores (43, 44) by means of an air stream (S), and
- a filter mechanism (57) arranged between the suction mechanism (54) and the second housing bores (43, 44) for filtering the fibers (5) out of the air stream (S), wherein the filter mechanism (57) forms a plurality of flow channels (62), which, in a flow direction (63) of the air stream (S), in each case have a widening flow cross section (Q).

2. Injection molding system according to claim 1, **characterized**
**in that** the feed device (4) has a multi-shaft screw machine configured as a two-shaft screw machine (40), and
**in that** the two-shaft screw machine (40) has feed screw shafts (45, 46) that are rotatably drivable in the same direction.

3. Injection molding system according to claim 1 or 2, **characterized**
**in that** the second housing (42) is fastened to the first housing (6) and the second housing bores (43, 44) open into the first housing bore (7).

4. Injection molding system according to any one of claims 1 to 3, **characterized**
**in that** the second feed opening (21) in cross section has the shape of an eight and the feed screw shafts (45, 46) extend into the second feed opening (21).

5. Injection molding system according to any one of claims 1 to 4, **characterized**
**in that** the second housing (42) is fastened to the first housing (6) and encloses an angle ϕ with a horizontal plane (E), wherein there applies: 0° ≤ ϕ ≤ 90°, in particular 0° ≤ ϕ ≤ 60° and in particular 0° ≤ ϕ ≤ 45°.

6. Injection molding system according to any one of claims 1 to 5, **characterized**
**in that** the screw shaft (12) has a length L along the first rotational axis (14) and a diameter D, wherein there applies: L/D ≥ 20, in particular L/D ≥ 25, in particular L/D ≥ 30, and in particular L/D ≥ 40.

7. Injection molding system according to any one of claims 1 to 6, **characterized**
**in that** the second feed opening (21) has a spacing A₁ from the first feed opening (20) and a spacing A₂ from the discharge opening (23), wherein there applies: 1 ≤ A₁/ A₂ ≤ 4, in particular 1 ≤ A₁/ A₂ ≤ 3, and in particular 1 ≤ A₁/ A₂ ≤ 2.

8. Injection molding system according to any one of claims 1 to 7, **characterized**
**in that** the injection molding device (2) has a melting zone (17) and a feed zone (18) arranged downstream in a plastics material conveying direction (15) and the screw shaft (12) in the feed zone (18) has a higher flight depth compared with the melting zone (17).

9. Injection molding system according to any one of claims 1 to 8, **characterized**
**in that** the injection molding device (2) has a feed zone (18) and a homogenizing zone (19) arranged downstream in a plastics material conveying direction (15) and the screw shaft (12) in the homogenizing zone (19) has at least one mixing and/or shearing element (28).

10. Injection molding system according to claim 9, **characterized**
**in that** the at least one mixing and/or shearing element (28) is exchangeable.

11. Injection molding system according to any one of claims 1 to 10, **characterized**
**in that** the injection molding device (2) and the feed device (4) are movable together on a bed (24).

12. Injection molding system according to any one of claims 1 to 11, **characterized**
**in that** the flow channels (62) have a flow cross-section (Q) that widens in a step-shaped manner.

13. Injection molding system according to any one of claims 1 to 12, **characterized**
**in that** the filter mechanism (57) has a plurality of filter elements (61) resting on one another and adjacent filter elements (61) in each case form a cross sectionally gap-like flow channel (62).

14. Injection molding system according to any one of claims 1 to 13, **characterized**
**in that** the feed device (4) has a monitoring sensor (60) for detecting a backing-up of the plastics material (3).

15. Injection molding system according to any one of claims 1 to 14, **characterized**
**in that** the feed device (4) has a cutting mechanism (30) for cutting continuous fibers (31) into fibers (5) with an adjustable fiber length.

16. Injection molding method for producing fiber-reinforced plastics material parts having the steps:
- providing an injection molding system (1) according to any one of claims 1 to 15,
- feeding plastics material (3) through the first feed opening (20) into the injection molding device (2),
- melting the plastics material (3) in the injection molding device (2),
- feeding fibers (5) by means of the feed device (4) through the second feed opening (21) into the molten plastics material (3),
- mixing the fed fibers (5) into the plastics material (3) by means of the screw shafts (12), and
- introducing the mixture of plastics material (3) and fibers (5) into the mold (9) to produce a fiber-reinforced plastics material part.

## Revendications

1. Installation de moulage par injection pour la fabrication de pièces en plastique renforcé de fibres, comprenant
- un dispositif de moulage par injection (2) avec
-- un premier boîtier (6),
-- un premier alésage de boîtier (7) formé dans le premier boîtier (6),
-- une première ouverture d'amenée (20) pour l'amenée de matière plastique (3) dans le premier alésage de boîtier (7),
-- un arbre de vis sans fin (12) pour la fusion et l'introduction de la matière plastique (3) dans un outil de moulage (9), ledit arbre étant disposé dans le premier alésage de boîtier (7) et étant entraînable en rotation autour d'un premier axe de rotation (14) correspondant,
-- une deuxième ouverture d'amenée (21) pour l'amenée de fibres (5) dans le premier alésage de boîtier (7),
-- une ouverture d'évacuation (23) pour le déversement de la matière plastique (3) et des fibres (5) hors du premier alésage de boîtier (7) dans l'outil de moulage (9), et
- un dispositif d'amenée (4) pour l'amenée des fibres (5) dans la matière plastique (3) se trouvant dans le dispositif de moulage par injection (2), lequel est prévu de telle manière que des fibres coupées (5) peuvent être amenées dans le premier alésage de boîtier (7) par la deuxième ouverture d'amenée (21), **caractérisée**
**en ce que** le dispositif d'amenée (4) comprend :
- une machine à vis à plusieurs arbres (40) avec
-- un deuxième boîtier (42),
-- plusieurs deuxièmes alésages de boîtier (43, 44) s'intersectant les uns avec les autres,
-- plusieurs arbres de vis sans fin d'amenée (45, 46) disposés de manière concentrique dans les deuxièmes alésages de boîtier (43, 44) et entraînables en rotation autour de deuxièmes axes de rotation (49, 50) correspondants,
-- une ouverture d'amenée de fibres (51) pour l'amenée des fibres (5) dans les deuxièmes alésages de boîtier (43, 44), et
-- une ouverture d'évacuation de fibres (53) pour le déversement des fibres (5) hors des deuxièmes alésages de boîtier (43, 44), un dispositif d'aspiration (54) pour l'aspiration des fibres (5) dans les deuxièmes alésages de boîtier (43, 44) par l'ouverture d'amenée de fibres (51) au moyen d'un flux d'air (S), et
- un dispositif de filtration (57) disposé entre le dispositif d'aspiration (54) et les deuxièmes alésages de boîtier (43, 44) pour la filtration des fibres (5) dans le flux d'air (S), dans lequel le dispositif de filtration (57) forme plusieurs canaux d'écoulement (62) qui présentent chacun une section d'écoulement (Q) s'élargissant dans la direction d'écoulement (63) du flux d'air (S).

2. Installation de moulage par injection selon la revendication 1, **caractérisée**
**en ce que** le dispositif d'amenée (4) comprend une machine à vis à plusieurs arbres réalisée comme machine à vis à deux arbres (40), et
**en ce que** la machine à vis à deux arbres (40) comprend des arbres de vis sans fin d'amenée (45, 46) entraînables en rotation dans le même sens.

3. Installation de moulage par injection selon la revendication 1 ou 2, **caractérisée**
**en ce que** le deuxième boîtier (42) est fixé contre le premier boîtier (6), et les deuxièmes alésages de boîtier (43, 44) débouchent dans le premier alésage de boîtier (7).

4. Installation de moulage par injection selon l'une des revendications 1 à 3, **caractérisée**
**en ce que** la deuxième ouverture d'amenée (21) a la forme d'un huit en section transversale, et les arbres de vis sans fin d'amenée (45, 46) s'étendent jusque dans la deuxième ouverture d'amenée (21).

5. Installation de moulage par injection selon l'une des revendications 1 à 4, **caractérisée**
**en ce que** le deuxième boîtier (42) est fixé contre le premier boîtier (6) et forme un angle ϕ avec un plan horizontal (E), où : 0° ≤ ϕ ≤ 90°, en particulier 0° ≤ ϕ ≤ 60° et en particulier 0° ≤ ϕ ≤ 45°.

6. Installation de moulage par injection selon l'une des revendications 1 à 5, **caractérisée**
**en ce que** l'arbre de vis sans fin (12) présente une longueur L le long du premier axe de rotation (14) et un diamètre D, où : L/D ≥ 20, en particulier L/D ≥ 25, en particulier L/D ≥ 30, et en particulier L/D ≥ 40.

7. Installation de moulage par injection selon l'une des revendications 1 à 6, **caractérisée**
**en ce que** la deuxième ouverture d'amenée (21) présente une distance A₁ à la première ouverture d'amenée (20) et une distance A₂ à l'ouverture d'évacuation (23), où : 1 ≤ A₁/A₂ ≤ 4, en particulier 1 ≤ A₁/A₂ ≤ 3, et en particulier 1 ≤ A₁/A₂ ≤ 2.

8. Installation de moulage par injection selon l'une des revendications 1 à 7, **caractérisée**
**en ce que** le dispositif de moulage par injection (2) comprend une zone de fusion (17) et une zone d'amenée (18) située en aval dans le sens de transport de la matière plastique (15), et **en ce que** l'arbre de vis sans fin (12) présente dans la zone d'amenée (18) une profondeur de pas supérieure en comparaison de la zone de fusion (17).

9. Installation de moulage par injection selon l'une des revendications 1 à 8, **caractérisée**
**en ce que** le dispositif de moulage par injection (2) comprend une zone d'amenée (18) et une zone d'homogénéisation (19) située en aval dans le sens de transport de la matière plastique (15), et **en ce que** l'arbre de vis sans fin (12) présente au moins un élément de mélange et/ou de cisaillement (28) dans la zone d'homogénéisation (19).

10. Installation de moulage par injection selon la revendication 9, **caractérisée**
**en ce que** ledit au moins un élément de mélange et/ou de cisaillement (28) est remplaçable.

11. Installation de moulage par injection selon l'une des revendications 1 à 10, **caractérisée**
**en ce que** le dispositif de moulage par injection (2) et le dispositif d'amenée (4) sont déplaçables ensemble sur un lit (24).

12. Installation de moulage par injection selon l'une des revendications 1 à 11, **caractérisée**
**en ce que** les canaux d'écoulement (62) présentent une section d'écoulement (Q) qui s'élargit par paliers.

13. Installation de moulage par injection selon l'une des revendications 1 à 12, **caractérisée**
**en ce que** le dispositif de filtration (57) comprend plusieurs éléments de filtration (61) juxtaposés, et **en ce que** des éléments de filtration (61) contigus forment un canal d'écoulement (62) à section transversale en forme de fente.

14. Installation de moulage par injection selon l'une des revendications 1 à 13, **caractérisée**
**en ce que** le dispositif d'amenée (4) comprend un capteur de surveillance (60) pour la détection d'un refoulement de matière plastique (3).

15. Installation de moulage par injection selon l'une des revendications 1 à 14, **caractérisée**
**en ce que** le dispositif d'amenée (4) comprend un dispositif de découpe (30) pour la découpe de fibres sans fin (31) en fibres (5) de longueur réglable.

16. Procédé de moulage par injection pour la fabrication de pièces en plastique renforcé de fibres, comprenant les étapes suivantes :
- préparation d'une installation de moulage par injection (1) selon l'une des revendications 1 à 15,
- amenée de matière plastique (3) dans le dispositif de moulage par injection (2) par la première ouverture d'amenée (20),
- fusion de la matière plastique (3) dans le dispositif de moulage par injection (2),
- amenée de fibres (5) dans la matière plastique (3) en fusion par la deuxième ouverture d'amenée (21), au moyen du dispositif d'amenée (4),
- mélange des fibres (5) amenées dans la matière plastique (3) au moyen des arbres de vis sans fin (12), et
- introduction du mélange de matière plastique (3) et de fibres (5) dans l'outil de moulage (9) pour la fabrication d'une pièce en plastique renforcé de fibres.
